# EUROPÄISCHE PATENTSCHRIFT

(11) **EP 1 494 007 B1**
(45) Veröffentlichungstag und Bekanntmachung des Hinweises auf die Patenterteilung: **04.06.2014**
(21) Anmeldenummer: 04014796.9
(22) Anmeldetag: 24.06.2004
(51) Int. Cl.: G01N 21/03, G01N 21/64, G01N 21/25, G01N 21/53, G01N 21/59, B01L 3/00

(54) **Vorrichtung und Verfahren zum Analysieren von Proben**
Apparatus and method for analysing samples
Dispositif et procédé pour l'analyse d'échantillons

(30) Priorität: 30.06.2003 CH 11482003
(43) Veröffentlichungstag der Anmeldung: 05.01.2005
(73) Patentinhaber: Tecan Trading AG, 8708 Männedorf (CH)
(72) Erfinder: Erlbacher, Andreas, 5082 Grödig (AT); Niggl, Lutz, 83329 Waging (DE); Krutzenbichler, Alois, 8706 Mailen (CH)
(74) Vertreter: OK pat AG

(56) Entgegenhaltungen:
- WO-A-01/20309
- DE-A- 3 104 796
- US-A- 4 254 223
- US-A- 4 534 651
- US-A- 5 599 503
- US-B1- 6 197 503
- PATENT ABSTRACTS OF JAPAN Bd. 1998, Nr. 02, 30. Januar 1998 (1998-01-30) & JP 9 273990 A (KURABO IND LTD), 21. Oktober 1997 (1997-10-21)
- PATENT ABSTRACTS OF JAPAN Bd. 0124, Nr. 11 (P-779), 31. Oktober 1988 (1988-10-31) & JP 63 148144 A (TOSHIBA CORP), 21. Juni 1988 (1988-06-21)

## Beschreibung

Die Erfindung betrifft gemäss dem Oberbegriff des unabhängigen Anspruchs 1 eine Vorrichtung zum Bestimmen von Parametern von flüssigen Proben. Diese Vorrichtung ist in ein System mit einer Lichtquelle zum Bestrahlen der Proben integrierbar ausgebildet und umfasst zumindest eine Spiegelfläche zum Ablenken von Licht aus der Lichtquelle aus einer im Wesentlichen vertikalen Einstrahlungsrichtung in eine Durchstrahlungsrichtung. Das System umfasst zudem einen Detektor zum Messen von Licht, das von einer bestrahlten Probe kommt, wobei der Detektor eine Detektionsrichtung aufweist, die im Wesentlichen parallel und beabstandet zu der im Wesentlichen vertikalen Einstrahlungsrichtung ist, so dass der zumindest eine Detektor nur das von einer individuell durchstrahlten Probe kommende Licht detektiert.

Solche Systeme sind z.B. als Fluorometer für Standard-Mikroplatten bekannt und weisen eine ähnliche optische Anordnung auf: Die Einstrahlungsrichtung ist vertikal und der Detektor befindet auf der gleichen optischen Achse. Dadurch wird eine Probe durchdringendes und/oder von einer Probe ausgelöstes und/oder von einer Probe reflektiertes bzw. gestreutes Licht detektiert. Geräte die durchdringendes Licht detektieren werden Photometer genannt, Geräte die gestreutes Licht detektieren werden Nephelometer genannt. Fluorometer detektieren nur das von der Probe ausgelöste Licht. Messsysteme, welche mehrere dieser Messgeräte vereinen nennt man z.B. Mulitfunktions-Reader.

Nachteilig bei solchen Mikroplatten-Photometern ist, dass die Füllhöhe der einzeln Wells unterschiedlich sein kann, so dass einen unterschiedliche Weglänge des die Probe durchdringenden Lichtstrahls entsteht. Die Füllhöhe wird dabei oft durch den Meniskus der Flüssigkeitsoberfläche in unterschiedlicher, nur schwer kontrollierbarer Art und Weise beeinflusst, so dass sehr oft für jede einzelne Probe eine individuelle Weglängenmessung vorgenommen werden muss. Eine solche Weglängenmessung ist aber einerseits zeitraubend, andererseits können dafür zwei Lichtquellen mit unterschiedlicher Wellenlänge verwendet werden, was die Vorrichtung verteuert. Mikroplatten mit sehr vielen Proben, z.B. mit 384 oder 1536 Wells, vereinfachen das Automatisieren der Untersuchungen dieser Proben und ermöglichen eine hohe Verarbeitungsrate. Die Probleme mit den unterschiedlichen Weglängen erhöhen sich jedoch mit zunehmender Well-Zahl bzw. mit abnehmendem Well-Inhalt.

Üblicherweise wird Fluoreszenz in Mikroplatten in Rückwärtsrichtung detektiert (180°). Da von der Flüssigkeitsoberfläche ca. 5% des Anregungslichtes reflektiert werden(Fresnel-Reflektion), gelangt viel Anregungslicht in den Detektionszweig, was zu erhöhtem Untergrundsignal und bei solchen Fluorometern schlussendlich zu geringerer Empfindlichkeit führt.

Seit langem sind auch Fluorometer bekannt, in denen mit Proben gefüllte Küvetten eingesetzt werden. Solche Fluorometer weisen eine andere optische Anordnung auf: Die Einstrahlungsrichtung ist horizontal und zumindest ein Detektor befindet sich in der gleichen horizontalen Ebene, wobei dessen optische Achse rechtwinklig zur optischen Achse der Lichtquelle steht. Durch diese abgewinkelte Detektoranordnung wird nur von einer Probe ausgelöstes und/oder von einer Probe reflektiertes bzw. gestreutes Licht detektiert; es gelangt kein bzw. sehr wenig Anregungslicht dieser Lichtquelle direkt in den Detektor, was die Messgenauigkeit erhöht. Ein zweiter, in der gleichen optischen Achse wie die Lichtquelle platzierter Detektor kann zum Messen der Transmission verwendet werden. Der Vorteil solcher Fluorometer, die allgemein als "auf Küvetten basierende Messgeräte" bezeichnet werden können, besteht unter anderem auch darin, dass durch die aufrecht im Strahlengang stehende Küvette eine exakt reproduzierbare Weglänge des die Probe durchdringenden Lichtstrahls definiert wird. Das Arbeiten mit Küvetten ist aber aufwändig und nur schwer automatisierbar.

Auch aus der Patentschrift US 4,534,651 B1 ein photometrisches Analysiergerät bekannt, welches speziell für den Gebrauch einer Reaktionsküvette ausgebildet ist. Dieses Gerät umfasst ein temperiertes Wasserbad, in das die Reaktionsküvette positioniert wird. In dem Wasserbad ist ein erster Spiegel zum Umleiten von Licht aus einer vertikalen Einstrahlungsrichtung in eine horizontale Durchstrahlungsrichtung und ein zweiter Spiegel zum Umleiten des die Probe horizontal durchstrahlten Lichts in eine vertikale Detektionsrichtung angeordnet.

Aus der Patentschrift US 6,197,503 B1 ist ein miniaturisierter Biochip zum Detektieren von Nukleinsäuren bekannt. Dieser Biochip ist mehrschichtig, wobei eine Schicht ein flächiges Areal mit gebundenen Proben und eine daneben angeordnete Spiegelfläche aufweist. Die darunter positionierten Schichten umfassen jeweils die Lichtquelle bzw. einen Photodetektor. Mittels der Spiegelfläche wird Licht aus der unteren Lichtquellen-Schicht so auf die Probenschicht gelenkt, dass das Areal mit den immobilisierten Proben schräg von oben und dadurch im Auflicht beleuchtet werden kann. Von der Probe kommendes Licht wird dann mit dem Detektor nachgewiesen.

Die Aufgabe der Erfindung besteht darin, alternative Lösungen vorzuschlagen, welche die Vorteile der bekannten Fluorometer bzw. Photometer möglichst erhalten, die Nachteile aber möglichst eliminieren.

Diese Aufgabe wird gemäss einem ersten Aspekt dadurch gelöst, dass laut Anspruch 1 eine Vorrichtung der eingangs genannten Art vorgeschlagen wird, die dadurch gekennzeichnet ist, dass sie als ein beweglicher, in das System integrierbarer Träger für Mikroplatten mit Wells ausgebildet ist, der zumindest eine Öffnung zum Platzieren einer Standard-Küvette und eine Öffnung zum Platzieren einer Standard-Mikroplatte mit Proben umfasst. Die Vorrichtung ist weiterhin dadurch gekennzeichnet, dass die zumindest eine Spiegelfläche auf dem Träger so angeordnet ist, dass im Wesentlichen vertikal einstrahlendes Licht der Lichtquelle in eine im Wesentlichen horizontale Durchstrahlungsrichtung ablenkbar ist und so eine in einer Standard-Küvette enthaltene flüssige Probe mit Licht in der im Wesentlichen horizontalen Durchstrahlungsrichtung bestrahlbar ist, wobei das von der durchstrahlten Probe kommende Licht durch die zumindest eine Öffnung auf den Detektor gelangt.

Diese Aufgabe wird alternativ gemäss einem zweiten Aspekt dadurch gelöst, dass laut Anspruch 2 eine Vorrichtung der eingangs genannten Art vorgeschlagen wird, die dadurch gekennzeichnet ist, dass sie als eine die zumindest eine Spiegelfläche umfassende Mikroplatte mit Wells ausgebildet ist. Diese Vorrichtung ist weiterhin dadurch gekennzeichnet, dass die zumindest eine Spiegelfläche der Mikroplatte so angeordnet ist, dass im Wesentlichen vertikal einstrahlendes Licht der Lichtquelle in eine im Wesentlichen horizontale Durchstrahlungsrichtung ablenkbar ist und so eine in einem Well enthaltene flüssige Probe mit Licht in der im Wesentlichen horizontalen Durchstrahlungsrichtung bestrahlbar ist, wobei die Mikroplatte über zumindest einer Öffnung eines beweglichen Trägers des Systems platzierbar ist, so dass das von einer individuell durchstrahlten Probe der Mikroplatte kommende Licht durch die zumindest eine Öffnung auf den Detektor gelangt.

Diese Aufgabe wird zudem dadurch gelöst, dass entsprechende alternative Verfahren vorgeschlagen werden, welche durch die Merkmale der kennzeichnenden Teile der Ansprüche 13 oder 14 gekennzeichnet sind.

Bevorzugte Ausführungsformen und weitere erfindungsgemässe Merkmale ergeben sich aus den jeweiligen abhängigen Ansprüchen.

Vorteile der vorliegenden Erfindung umfassen:
- Proben in einer Mikroplatte, die im wesentlichen in horizontaler Richtung durchstrahlt werden, weisen sie immer die gleiche Weglänge auf.
- Es kann ein auf einem Monochromator basierender Mikroplatten-Reader eingesetzt und auf Weglängenmessungen verzichtet werden.
- Es können hochpräzise Fluoreszenz-Messungen vorgenommen werden, ohne dass direkt in die Probe einfallendes Licht auf den Detektor gelangt.
- Es können Trübungs- (turbidity) und Löslichkeits- (solubility) Messungen durchgeführt werden, bei denen die 90° Geometrie Voraussetzung ist.
- An den gleichen Proben können sowohl 0°, 90° und 180° Fluorometrie und 0° Absorption als auch 90° Fluorometrie, Löslichkeit, Ramanspektrum und Dichtemessungen vorgenommen werden.
- Der Probendurchsatz ist dank Mikroplattentechnologie sehr gross und alle Vorgänge können automatisiert werden.

Anhand von schematischen Zeichnungen, die ausgewählte Ausführungsbeispiele darstellen und die Erfindung illustrieren, deren Umfang der aber nicht einschränken sollen, wird im Folgenden die Erfindung näher erläutert. Dabei zeigen:
- Fig. 1: einen Vertikalschnitt durch ein System zum Bestrahlen von fluidhaltigen Proben mit Licht einer Lichtquelle in einer im wesentlichen vertikalen Einstrahlungsrichtung und zum Bestimmen von Probenparametern mit einer erfindungsgemässen Vorrichtung gemäss einer ersten Ausführungsform;
- Fig. 2: ein System gemäss Fig. 1, mit einer erfindungsgemässen Vorrichtung gemäss einer zweiten Ausführungsform;
- Fig. 3: vertikale Teilschnitte von Varianten einer erfindungsgemässen Vorrichtung gemäss der zweiten Ausführungsform: wobei
Fig. 3A eine erste Variante, und
Fig. 3B eine zweite und dritte Variante zeigt;
- Fig. 4A: eine Draufsicht auf eine Vorrichtung der dritten Variante gemäss Fig. 3B;
- Fig. 4B: eine Draufsicht auf eine Vorrichtung einer vierten Variante der zweiten Ausführungsform;
- Fig. 4C: eine Draufsicht auf eine alternative (versetzte) Anordnung von jeweils zusammengehörenden Reflektor- und Probenwells.

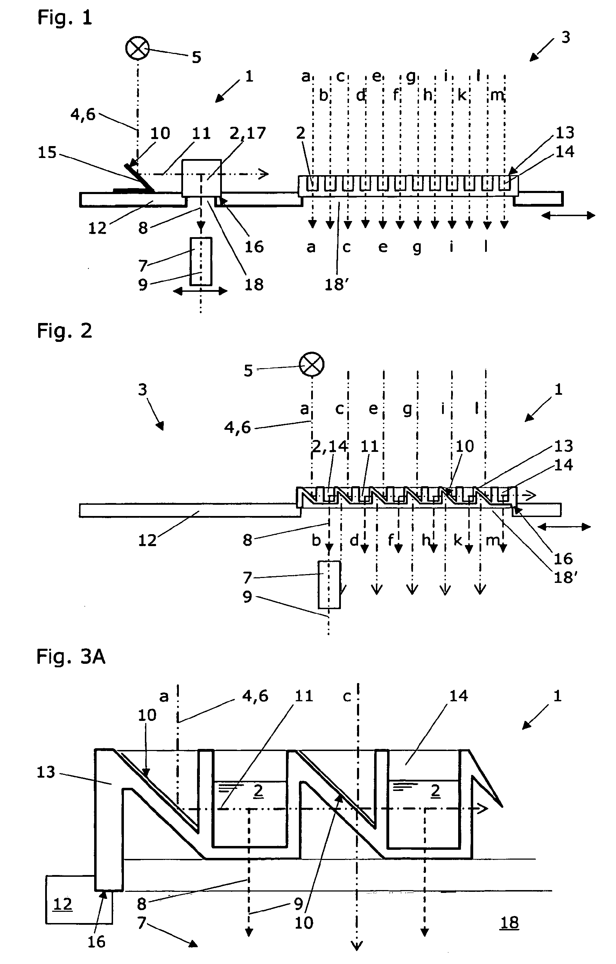

Figur 1 zeigt eine Vorrichtung 1 zum Bestimmen von Parametern von fluidhaltigen Proben 2 in einem System 3 zum Bestrahlen der Proben 2 mit Licht 4 einer Lichtquelle 5 in einer im wesentlichen vertikalen Einstrahlungsrichtung 6. Dieses System 3 umfasst einen Detektor 7 zum Messen von eine Probe durchdringendem und/oder von in einer Probe ausgelöstem und/oder von einer Probe reflektiertem bzw. gestreutem Licht. Im Zusammenhang mit der vorliegenden Erfindung wird dieses von in einer Probe ausgelöste und/oder von einer Probe reflektierte bzw. gestreute Licht als das "von einer Probe kommende Licht 8" bezeichnet. Dieser Detektor 7 liegt auf einer optischen Achse 9, die im wesentlichen parallel zur optischen Achse 6 der Lichtquelle 5 ist.

Alternativ zu der gezeigten Ausführung kann vorgesehen sein, dass ein Ende einer optischen Faser an der Stelle des in Fig. 1 gezeigten Detektors 7 sitzt, und dass diese optische Faser das von der Probe kommende Licht 8 zum eigentlichen Detektor führt. Wichtig ist jedenfalls, dass die effektive Detektionsrichtung 9,9' parallel zur opt. Achse 6 liegt; dies kann z.B. durch das Verwenden einer Faseroptik erreicht werden, deren optischer Eingang in der gewünschten Detektionsrichtung angeordnet ist und deren optischer Ausgang in den Detektor mündet.
Ein solcher Detektor kann praktisch in beliebiger Richtung und irgendwo in einem System 3 zum Bestimmen von Parametern von fluidhaltigen Proben 2 angeordnet sein.

Diese erfindungsgemässe Vorrichtung 1 einer ersten Ausführungsform umfasst hier eine einzige Spiegelfläche 10, mit welcher das im wesentlichen vertikal aus der Lichtquelle 5 ankommende Licht 4 in eine im wesentlichen horizontale Durchstrahlungsrichtung 11 ablenkbar ist. Dieses Licht 4 durchstrahlt eine Proben 2 enthaltende, horizontal gelegte Standardküvette 17, deren Öffnung abgedichtet wurde. Zum Abdichten eignen sich wasserabstossende, elastische Folien, wie Parafilm® (Pechiney Plastic Packaging, Inc.) oder Stopfen. Es kann auch eine Kunststoffküvette oder eine Glasküvette bzw. Quarzglasküvette 17 verwendet werden, die eine reduzierte Höhe aufweist und senkrecht stehend über einer ersten Öffnung 18 platziert wird. Von der Probe 2 in der Küvette 17 ausgelöstes und/oder dieser Probe reflektiertes bzw. gestreutes, also von dieser Probe kommendes Licht 8 gelangt durch die dafür in dem beweglichen Träger 12 vorgesehene Öffnung 18 auf den Detektor 7. Dort wird das ankommende Licht gemessen und die Messsignale werden dann an eine digitale Recheneinheit (nicht dargestellt) zur Auswertung und Darstellung bzw. Aufzeichnung weitergeleitet.

Gleichzeitig kann auf dem Träger 12 des Systems 3 eine Standard-Mikroplatte 13 mit Wells 14 so platziert sein, dass diese über einer zweiten Öffnung 18' liegt. Die Proben 2 einer Reihe Wells a-m können dann mit senkrechter Durchstrahlung untersucht werden. Ein unterhalb des Detektors 7 gezeichneter Doppelpfeil zeigt an, dass der Detektor beweglich sein kann. Der Detektor kann - falls erwünscht - soweit verschoben werden, dass seine optische Achse 9 mit der optischen Achse 6 der Lichtquelle 5 zusammenfällt. In dieser Detektorstellung kann die 0° Fluorometrie oder 0° Absorption der Proben mit dem gleichen Detektor 7 gemessen werden wie vorher die 90° Fluorometrie, die Löslichkeitsmessung, die Aufnahme eines Ramanspektrums und/oder die vorgenommene Dichtemessungen an der Küvette 17. Alternativ zur Beweglichkeit des Detektors 7, kann die Lichtquelle 5 oder beide beweglich sein. Ebenso kann ein zweiter Detektor (nicht gezeigt) vorgesehen sein, der gerade die notwendige Distanz zum ersten Detektor 7 aufweist.

Auf jeden Fall wird bevorzugt, dass der Träger 12 wie ein Kreuztisch in X- und Y-Richtung beweglich ist. Es kann vorgesehen sein, dass eine oder mehrere Küvetten 17 und/oder eine oder mehrere Mikroplatten 13 auf dem Träger 12 im Bereich von entsprechenden Öffnungen 18,18' platziert werden. In eine solchen Küvette 17 kann z.B. eine Stammlösung oder eine andere Referenzflüssigkeit für die zu untersuchenden Proben 2 in der Mikroplatte 13 eingefüllt sein.

Die erste Ausführungsform der erfindungsgemässen Vorrichtung 1 zur Verwendung in einem System 3, das einen im wesentlichen horizontal angeordneten und in X- und/oder in Y-Richtung beweglichen Träger 12 für Mikroplatten 13 mit Wells 14 umfasst, ist dadurch gekennzeichnet, dass sie als dieser Träger 12 ausgebildet ist. Zu diesem Zweck umfasst die Vorrichtung 1 zumindest einen Spiegel 15 mit der Spiegelfläche 10 und eine dem Spiegel 15 zugeordnete Tragfläche 16 zum Auflegen einer eine Probe 2 enthaltenden Küvette 17. Zudem umfasst diese Vorrichtung 1 im Bereich der Tragfläche 16 eine Öffnung 18 zum Durchlass von in der Probe ausgelöstem und/oder von der Probe reflektiertem bzw. gestreutem, also von der Probe kommendem Licht 8 zu dem Detektor 7. Dieser Spiegel 15 ist vorzugsweise ein mit Aluminium beschichteter Glasspiegel. Der Spiegel 15 kann aber auch eine Spiegeloberfläche 10 aus Kunststoff umfassen oder ganz aus Kunststoff hergestellt sein. Geeignete Kunststoffe reflektieren das Anregungslicht teilweise (zu ca. 5%) und müssten demzufolge nicht unbedingt beschichtet sein. Zum Messen des die Probe 2 durchstrahlenden Lichts 4 kann hinter der Küvette 17 ein zweiter Spiegel (nicht gezeigt) angeordnet werden, welcher dieses Durchstrahlungslicht 4 auf einen zusätzlichen, über der Probenebene angeordneten Detektor (nicht gezeigt) lenkt.

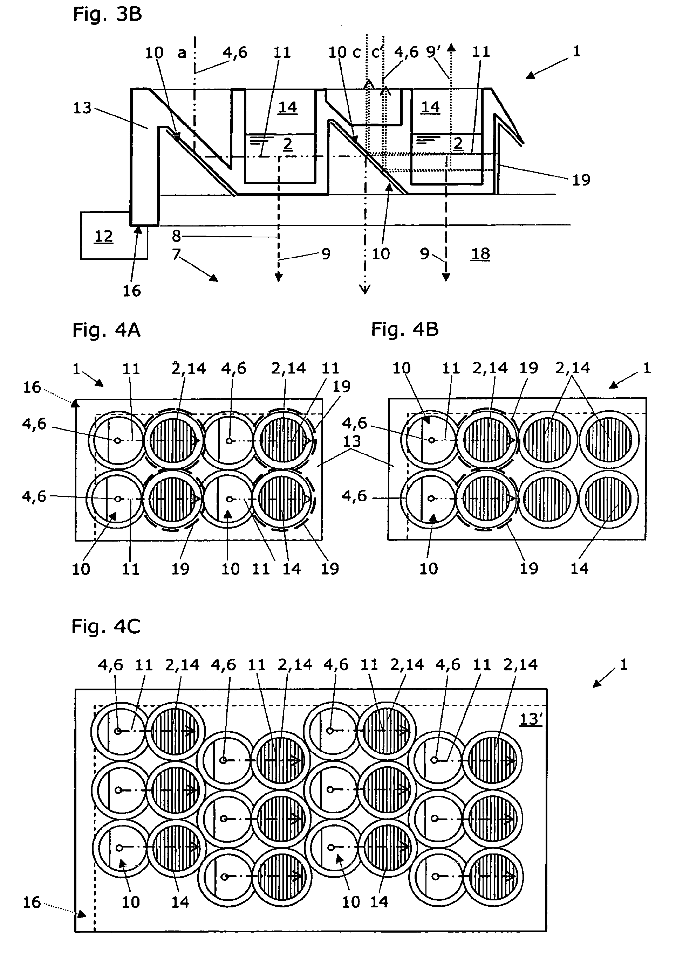

Gemäss einer zweiten Ausführungsform ist die erfindungsgemässe Vorrichtung 1 zur Verwendung in einem System 3, das einen im wesentlichen horizontal angeordneten und in X- und/oder in Y-Richtung beweglichen Träger 12 für Mikroplatten 13 mit Wells 14 umfasst, dadurch gekennzeichnet, dass die Vorrichtung 1 als eine dieser Mikroplatten 13 ausgebildet ist. Dies ist in Figur 2 dargestellt, wo eine erfindungsgemässe Mikroplatte 13 auf dem Träger 12 des Systems 3 so platziert ist, dass diese über einer zweiten Öffnung 18' liegt. Die Wells a, c, e, g, i, l in einer Reihe werden nacheinander mit Licht 4 aus der Lichtquelle 5 bestrahlt. Dort werden die Lichtstrahlen an je einer Spiegelfläche 10 in die alternative, horizontale Durchstrahlungsrichtung 11 umgelenkt und durchqueren die Nachbarwells b, d, f, h, k, m, in denen sich je eine Probe 2 befindet. Insbesondere in der besonders bevorzugten Ausführungsform gemäss Fig. 3B (siehe dort Well c) kann auf eine spiegelnde Beschichtung der Spiegelfläche 10 verzichtet werden, weil der Kunststoff-Luft-Übergang (45° Fläche) auch ohne Beschichtung als totalreflektierender Spiegel für das von oben oder von rechts kommende Licht wirkt.

Durch Verschieben des Trägers 12 werden die Wells b, d, f, h, k, m mit den durchstrahlten Proben 2 nacheinander so über dem Detektor 7 positioniert, dass das in der Probe ausgelöste und/oder von der Probe reflektierte bzw. gestreute, also das von der Probe kommende Licht 8 zu dem Detektor 7 gelangt und von diesem gemessen werden kann.

Durch Verschieben der Lichtquelle 5 und/oder des Detektors 7 bzw. durch das Verwenden eines zweiten Detektors oder einer zweiten Lichtquelle kann erreicht werden, dass die optische Achse 9 des Detektors 7 mit der optischen Achse 6 der Lichtquelle 5 zusammenfällt, somit könnte in jedem der Wells b, d, f, h, k, m auch eine 0° Messung des die Proben durchstrahlenden Lichts 4 ausgeführt werden.

Gemäss einer ersten Variante der zweiten Ausführungsform (vgl. Fig. 3A) ist vorgesehen, dass die als Mikroplatte konzipierte Vorrichtung eine Vielzahl von Spiegelflächen 10 und Wells 14 umfasst, wobei jedem Well 14 eine Spiegelfläche 10 zugeordnet ist (vgl. Fig. 4A und 4C). Z.B. umfasst eine Mikroplatte 13,13' gleich viele Wells 14 wie Spiegelflächen 10, d.h. jede Probe 2 kann horizontal und vertikal durchstrahlt werden.

Es kann aber auch eine Vorrichtung 1 vorgesehen sein, welche eine Vielzahl von Spiegelflächen 10 umfasst, denen je ein Well 14 zugeordnet ist (vgl. Fig. 4B). Z.B. umfasst eine Mikroplatte 13 nur eine Spiegelfläche 10 pro Reihe Wells 14, d.h. in einer Mikroplatte mit 96 Wells (8x12) kann nur eine Probe 2 pro Reihe horizontal und vertikal durchstrahlt werden. Es kann auch vorgesehen werden, dass eine Mikroplatte 13 nur eine einzige Spiegelfläche 10 aufweist (nicht gezeigt), so dass die Referenzprobe nicht in einer Küvette 17 (vgl. erste Ausführungsform gemäss Fig. 1), sondern in einem Well 14 einer Mikroplatte 13 platziert werden kann.

Figur 3A zeigt einen vertikalen Teilschnitt einer ersten Variante einer erfindungsgemässen Vorrichtung gemäss der zweiten Ausführungsform. Es ist klar ersichtlich, dass das Licht 4 aus der Lichtquelle 5 in Richtung der im wesentlichen vertikalen optischen Achse 6 in die Wells a und c der Mikroplatte 13 eindringt. Im Well a trifft der Lichtstrahl auf eine Spiegelfläche 10 und wird von dieser in eine im wesentlichen horizontale Richtung 11 abgelenkt. Darauf durchdringt der Lichtstrahl eine erste Wand des Wells 14, die Probe 2 und eine zweite Wand des Wells. Damit der Lichtstrahl besser an der schiefen Ebene, welche die Spiegelfläche 10 darstellt, gespiegelt wird, ist diese schiefe Ebene vorzugsweise mit Aluminium dünn beschichtet. Diese Beschichtung kann z.B. in einem PVD-Prozess (physical vapor deposition) oder auch in einem CVD-Prozess (chemical vapor deposition) aufgebracht werden. Weil das selbe wie für das Well a auch für das Well c gilt, weist auch jene schiefe Ebene bevorzugt eine solche Verspiegelung für die Spiegelfläche 10 auf. Somit ist vorzugsweise ein Teil der oberen Oberfläche der Mikroplatte 13 verspiegelt und jedem Well 14, welches eine Probe enthält, ist eine Spiegelfläche 10 zugeordnet. Das Vorsehen einer solchen Beschichtung bringt den Vorteil mit sich, dass nur das beabsichtigte Well 14 mit der darin enthaltenen Probe 2, das sich unmittelbar neben dem Well mit der durch den Lichtstrahl 4,6 beaufschlagten Spiegelfläche 10 befindet, von diesem Lichtstrahl durchdrungen wird. Die Spiegelflächen 10 der in der Beleuchtungsrichtung nachfolgenden Wells verhindern, dass der Lichtstrahl eine zweite Probe beleuchtet. Wie auch aus der Figur 3A ersichtlich, spielt der Flüssigkeitspegel der Proben 2 in den Wells 14 eine untergeordnete Rolle; die Weglänge des die Probe durchdringenden Lichtstrahls ist konstant. Einzige Voraussetzung ist, dass der Lichtstrahl unterhalb der Flüssigkeitsoberfläche verläuft. Der Teil des Lichtes, der die Probe passiert, wird an der nachfolgenden Spiegelfläche 10 nach unten abgelenkt und könnte so einem zweiten Detektor (nicht gezeigt) zugeleitet werden, während der von der Probe ausgelöste und/oder von der Probe reflektierte bzw. gestreute Teil des Lichts durch den Boden des Wells 14 auf den Detektor 7 trifft und von diesem gemessen wird.

Figur 3B zeigt einen vertikalen Teilschnitt einer zweiten und dritten Variante einer erfindungsgemässen Vorrichtung gemäss der zweiten Ausführungsform. Es ist klar ersichtlich, dass das Licht 4 aus der Lichtquelle 5 in Richtung der im wesentlichen vertikalen optischen Achse 6 in die Wells a und c der Mikroplatte 13 eindringt. Im Well a trifft der Lichtstrahl auf eine Spiegelfläche 10 und wird von dieser in eine im wesentlichen horizontale Richtung 11 abgelenkt. Darauf durchdringt der Lichtstrahl eine erste Wand des Wells 14, die Probe 2 und eine zweite Wand des Wells. Damit der Lichtstrahl besser an der schiefen Ebene, welche die Spiegelfläche 10 darstellt, gespiegelt wird, ist diese schiefe Ebene in Well a vorzugsweise mit einer dünnen Schicht Aluminium belegt. Diese Beschichtung kann z.B. in einem PVD-Prozess (physical vapor deposition) oder auch in einem CVD-Prozess (chemical vapor deposition) aufgebracht werden. Weil das selbe wie für das Well a auch für das Well c gilt, weist auch jene schiefe Ebene bevorzugt eine solche Verspiegelung für die Spiegelfläche 10 auf. Somit ist vorzugsweise ein Teil der unteren Oberfläche der Mikroplatte 13 verspiegelt und jedem Well 14, welches eine Probe enthält, ist eine Spiegelfläche 10 zugeordnet. Das Vorsehen einer solchen Beschichtung bringt den Vorteil mit sich, dass nur das beabsichtigte Well 14 mit der darin enthaltenen Probe 2, das sich unmittelbar neben dem Well mit der durch den Lichtstrahl 4,6 beaufschlagten Spiegelfläche 10 befindet, von diesem Lichtstrahl durchdrungen wird. Die Spiegelflächen 10 der in der Beleuchtungsrichtung nachfolgenden Wells verhindern, dass der Lichtstrahl eine zweite Probe beleuchtet. Wie auch aus der Figur 3B ersichtlich, spielt der Flüssigkeitspegel der Proben 2 in den Wells 14 eine untergeordnete Rolle; die Weglänge des die Probe durchdringenden Lichtstrahls ist konstant. Einzige Voraussetzung ist, dass der Lichtstrahl unterhalb der Flüssigkeitsoberfläche verläuft. Der Teil des Lichtes, der die Probe passiert, wird an der nachfolgenden Spiegelfläche 10 nach unten abgelenkt und könnte so einem zweiten Detektor (nicht gezeigt) zugeleitet werden, während der von der Probe ausgelöste und/oder von der Probe reflektierte bzw. gestreute Teil des Lichts durch den Boden des Wells 14 auf den Detektor 7 trifft und von diesem gemessen wird.

Well c unterscheidet sich von Well a dadurch, dass es zum Teil mit Mikroplattenmaterial, z.B. Kunststoff, Glas oder Quarzglas, ausgefüllt ist. Dies ermöglicht, die Anzahl Phasenübergänge, die der Lichtstrahl durchlaufen muss, zu reduzieren. Well d unterscheidet sich von Well b dadurch, dass es eine verspiegelte Wand 19 aufweist, welche das das Well durchdringende Licht wieder in Richtung der Lichtquelle zurückwirft. Es kann darum auch vorgesehen sein, dass unmittelbar neben der Anregungslichtquelle 5 ein weiterer Detektor angeordnet wird. Dieser Detektor dient dann z.B. zum Erfassen der 180° Fluoreszenz oder der 90° Fluoreszenz von oben in der Richtung 9' (vgl. Fig. 3B, Wells c und d). Die Variante gemäss den Wells c und d in Fig. 3B hat den weiteren Vorteil, dass das Anregungslicht 4 zweimal das Well 14 durchquert, wodurch eine höhere Signalausbeute erzielt werden kann. Dies trifft in jedem Fall zu, egal ob von oben mit einem Detektor in der optischen Achse 9' oder von unten mit einem Detektor in der optischen Achse 9 gemessen wird.

Die Draufsicht in Figur 4A zeigt eine Mikroplatte 13 mit lauter Wellpaaren, die den Wells c und d in Figur 3B entsprechen. Die Draufsicht in Figur 4B zeigt eine Mikroplatte 13, die nur pro Reihe Wells ein einziges Wellpaar aufweist, das den Wells c und d in Figur 3B entspricht. Allen diesen Wells d, ist eine Spiegelfläche 10 und auf der von der Spiegelfläche 10 abgewandten Seite eine Wand 19 zugeordnet. Vorzugsweise ist diese Wand 19 verspiegelt oder licht-undurchlässig ausgebildet. Auch hier besteht diese Spiegeloberfläche 10 vorzugsweise aus einer Aluminiumbeschichtung. Es kann aber auch auf eine solche Metallbeschichtung verzichtet werden, weil der Kunststoff der Mikroplatte das Anregungslicht teilweise (zu ca. 5%) reflektiert. Eine alternative (versetzte) Anordnung der jeweils zusammengehörenden Reflektorwells a bzw. c etc. und Probenwells b bzw. d etc. ist in solchen Fällen vorteilhaft. So trifft ein ein Probenwell b bzw. d etc. durchdringender Lichtstrahl nicht auf ein weiteres Reflektorwell c bzw. e und ein dahinter liegendes Probenwell d bzw. f, sondern nur auf die Zwischenwände der Nachbarwells (vgl. Fig. 4C). Ein zeitsparendes Abrastern der alternativen Mikroplatte 13' ist ebenfalls möglich, weil die Probenwells in einer geraden Reihe neben einander angeordnet sind.

Beliebige Kombinationen der Merkmale der gezeigten oder beschrieben Ausführungsformen sind im Rahmen dieser Erfindung möglich. Die Bezugszeichen in den Figuren bezeichnen gleiche Elemente, auch wenn im Text nicht ausführlich darauf eingegangen wird.

## Patentansprüche

1. Vorrichtung (1) zum Bestimmen von Parametern von flüssigen Proben (2), die in ein System (3) mit einer Lichtquelle (5) zum Bestrahlen der Proben (2) integrierbar ausgebildet ist,
wobei die Vorrichtung (1) zumindest eine Spiegelfläche (10) zum Ablenken von Licht (4) aus der Lichtquelle (5) aus einer im Wesentlichen vertikalen Einstrahlungsrichtung (6) in eine Durchstrahlungsrichtung (11) umfasst,
wobei das System (3) zudem einen Detektor (7) zum Messen von Licht (8), das von einer bestrahlten Probe (2) kommt, umfasst,
und wobei der Detektor (7) eine Detektionsrichtung (9,9') aufweist, die im Wesentlichen parallel und beabstandet zu der im Wesentlichen vertikalen Einstrahlungsrichtung (6) ist, so dass der zumindest eine Detektor (7) nur das von einer individuell durchstrahlten Probe (2) kommende Licht (8) detektieren kann,
**dadurch gekennzeichnet, dass** die Vorrichtung (1) als ein beweglicher, in das System (3) integrierbarer Träger (12) für Mikroplatten (13) mit Wells (14) ausgebildet ist, der zumindest eine Öffnung (18) zum Platzieren einer Standard-Küvette (17) und eine Öffnung (18') zum Platzieren einer Standard-Mikroplatte (13) mit Proben (2) umfasst, und dass die zumindest eine Spiegelfläche (10) auf dem Träger (12) so angeordnet ist, dass im Wesentlichen vertikal einstrahlendes Licht (4) der Lichtquelle (5) in eine im Wesentlichen horizontale Durchstrahlungsrichtung (11) ablenkbar ist und so eine in einer Standard-Küvette (17) enthaltene flüssige Probe (2) mit Licht (4) in der im Wesentlichen horizontalen Durchstrahlungsrichtung (11) bestrahlbar ist,
wobei das von der durchstrahlten Probe (2) kommende Licht (8) durch die zumindest eine Öffnung (18) auf den Detektor (7) gelangen kann.

2. Vorrichtung (1) zum Bestimmen von Parametern von flüssigen Proben (2), die in ein System (3) mit einer Lichtquelle (5) zum Bestrahlen der Proben (2) integrierbar ausgebildet ist,
wobei die Vorrichtung (1) zumindest eine Spiegelfläche (10) zum Ablenken von Licht (4) aus der Lichtquelle (5) aus einer im Wesentlichen vertikalen Einstrahlungsrichtung (6) in eine Durchstrahlungsrichtung (11) umfasst,
wobei das System (3) zudem einen Detektor (7) zum Messen von Licht (8), das von einer bestrahlten Probe (2) kommt, umfasst,
und wobei der Detektor (7) eine Detektionsrichtung (9,9') aufweist, die im Wesentlichen parallel und beabstandet zu der im Wesentlichen vertikalen Einstrahlungsrichtung (6) ist, so dass der zumindest eine Detektor (7) nur das von einer individuell durchstrahlten Probe (2) kommende Licht (8) detektieren kann,
**dadurch gekennzeichnet, dass** die Vorrichtung (1) als eine die zumindest eine Spiegelfläche (10) umfassende Mikroplatte (13) mit Wells (14) ausgebildet ist, und dass die zumindest eine Spiegelfläche (10) der Mikroplatte (13) so angeordnet ist, dass im Wesentlichen vertikal einstrahlendes Licht (4) der Lichtquelle (5) in eine im Wesentlichen horizontale Durchstrahlungsrichtung (11) ablenkbar ist und so eine in einem Well (14) enthaltene flüssige Probe (2) mit Licht (4) in der im Wesentlichen horizontalen Durchstrahlungsrichtung (11) bestrahlbar ist, wobei die Mikroplatte (13) über zumindest einer Öffnung (18,18') eines beweglichen Trägers (12) des Systems (3) platzierbar ist, so dass das von einer individuell durchstrahlten Probe (2) der Mikroplatte (13) kommende Licht (8) durch die zumindest eine Öffnung (18,18') auf den Detektor (7) gelangen kann.

3. Vorrichtung (1) nach Anspruch 1 oder 2, **dadurch gekennzeichnet, dass** der Winkel zwischen der Detektionsrichtung (9') des Detektors (7) und der optischen Achse des die Probe (2) durchstrahlenden Lichts (4) 90° beträgt.

4. Vorrichtung (1) nach Anspruch 1, **dadurch gekennzeichnet, dass** der Träger (12) in X- und/oder in Y-Richtung beweglich ist.

5. Vorrichtung (1) nach Anspruch 1, **dadurch gekennzeichnet, dass** sie zumindest einen Spiegel (15) mit der Spiegelfläche (10) und eine dem Spiegel (15) zugeordnete Tragfläche (16) zum Auflegen einer eine Probe (2) enthaltenden Küvette (17) umfasst, wobei die Vorrichtung (1) im Bereich der Tragfläche (16) die Öffnung (18) zum Durchlass von in der Probe ausgelöstem und/oder von der Probe reflektiertem Licht (8) zu dem Detektor (7) umfasst.

6. Vorrichtung (1) nach Anspruch 2, **dadurch gekennzeichnet, dass** sie eine Vielzahl von Spiegelflächen (10) und Wells (14) umfasst, wobei jedem Well (14) eine Spiegelfläche (10) zugeordnet ist.

7. Vorrichtung (1) nach Anspruch 2, **dadurch gekennzeichnet, dass** sie eine Vielzahl von Spiegelflächen (10) und Wells (14) umfasst, wobei jeder Spiegelfläche (10) ein Well (14) zugeordnet ist.

8. Vorrichtung (1) nach einem der Ansprüche 6 oder 7, **dadurch gekennzeichnet, dass** denjenigen Wells (14) der Vorrichtung (1), denen eine Spiegelfläche (10) zugeordnet ist, auf der von der Spiegelfläche (10) abgewandten Seite eine Wand (19) zugeordnet ist.

9. Vorrichtung (1) nach einem der Ansprüche 2 oder 6 bis 8, **dadurch gekennzeichnet, dass** deren obere Oberfläche und/oder deren untere Oberfläche zumindest teilweise verspiegelt sind.

10. Vorrichtung (1) nach Anspruch 8, **dadurch gekennzeichnet, dass** die Wand (19) verspiegelt oder licht-undurchlässig ausgebildet ist.

11. Vorrichtung (1) nach einem der Ansprüche 9 oder 10, **dadurch gekennzeichnet, dass** die Mikroplatte zumindest eine dünne Schicht umfasst, mit welcher die Verspiegelungen auf Teilen ihrer Oberflächen bewirkt werden.

12. System (3) zum Bestimmen von Parametern von fluidhaltigen Proben (2), das einen im wesentlichen horizontal angeordneten und in X- und/oder in Y-Richtung beweglichen Träger (12) für Mikroplatten (13) mit Wells (14) umfasst, **dadurch gekennzeichnet, dass** das System (3) zumindest eine Vorrichtung (1) nach einem der vorhergehenden Ansprüche umfasst.

13. Verfahren zum Bestimmen von Parametern von flüssigen Proben (2) mit einer Vorrichtung (1), die in ein System (3) mit einer Lichtquelle (5) zum Bestrahlen der Proben (2) integriert wird,
wobei die Vorrichtung (1) zumindest eine Spiegelfläche (10) umfasst, mit der Licht (4) aus der Lichtquelle (5) aus einer im Wesentlichen vertikalen Einstrahlungsrichtung (6) in eine Durchstrahlungsrichtung (11) abgelenkt wird;
wobei das System (3) zudem einen Detektor (7) umfasst, mit dem Licht (8), das von einer bestrahlten Probe (2) kommt, gemessen wird,
und wobei der Detektor (7) eine Detektionsrichtung (9,9') aufweist, die im Wesentlichen parallel und beabstandet zu der im Wesentlichen vertikalen Einstrahlungsrichtung (6) ist, so dass der zumindest eine Detektor (7) nur das von einer individuell durchstrahlten Probe (2) kommende Licht (8) detektiert,
**dadurch gekennzeichnet, dass** die Vorrichtung (1) als ein beweglicher, in das System (3) integrierter Träger (12) für Mikroplatten (13) mit Wells (14) ausgebildet ist, der zumindest eine Öffnung (18) umfasst, über die eine Standard-Küvette (17) platziert wird und eine Öffnung (18'), über die eine Standard-Mikroplatte (13) mit Proben (2) platziert wird, und dass die zumindest eine Spiegelfläche (10) auf dem Träger (12) so angeordnet ist, dass im Wesentlichen vertikal einstrahlendes Licht (4) der Lichtquelle (5) in eine im Wesentlichen horizontale Durchstrahlungsrichtung (11) abgelenkt wird und so eine in einer Standard-Küvette (17) enthaltene flüssige Probe (2) mit Licht (4) in der im Wesentlichen horizontalen Durchstrahlungsrichtung (11) bestrahlt wird,
wobei das von der durchstrahlten Probe (2) kommende Licht (8) durch die zumindest eine Öffnung (18) auf den Detektor (7) gelangt.

14. Verfahren zum Bestimmen von Parametern von flüssigen Proben (2) mit einer Vorrichtung (1), die in ein System (3) mit einer Lichtquelle (5) zum Bestrahlen der Proben (2) integriert wird,
wobei die Vorrichtung (1) zumindest eine Spiegelfläche (10) umfasst, mit der Licht (4) aus der Lichtquelle (5) aus einer im Wesentlichen vertikalen Einstrahlungsrichtung (6) in eine Durchstrahlungsrichtung (11) abgelenkt wird;
wobei das System (3) zudem einen Detektor (7) umfasst, mit dem Licht (8), das von einer bestrahlten Probe (2) kommt, gemessen wird,
und wobei der Detektor (7) eine Detektionsrichtung (9,9') aufweist, die im Wesentlichen parallel und beabstandet zu der im Wesentlichen vertikalen Einstrahlungsrichtung (6) ist, so dass der zumindest eine Detektor (7) nur das von einer individuell durchstrahlten Probe (2) kommende Licht (8) detektiert,
**dadurch gekennzeichnet, dass** die Vorrichtung (1) als eine die zumindest eine Spiegelfläche (10) umfassende Mikroplatte (13) mit Wells (14) ausgebildet ist, wobei die Mikroplatte (13) über zumindest einer Öffnung (18,18') eines beweglichen Trägers (12) des Systems (3) platziert wird, und dass die zumindest eine Spiegelfläche (10) der Mikroplatte (13) so angeordnet ist, dass im Wesentlichen vertikal einfallendes Licht (4) der Lichtquelle (5) in eine im Wesentlichen horizontale Durchstrahlungsrichtung (11) abgelenkt wird, und so eine in einem Well (14) enthaltene flüssige Probe (2) mit Licht (4) in der horizontalen Durchstrahlungsrichtung (11) bestrahlt wird,
so dass das von einer individuell durchstrahlten Probe (2) der Mikroplatte (13) kommende Licht (8) durch diese zumindest eine Öffnung (18,18') auf den Detektor (7) gelangt.

15. Verfahren nach einem der Ansprüche 13 oder 14, **dadurch gekennzeichnet, dass** der Winkel zwischen der Detektionsrichtung (9') des Detektors (7) und der optischen Achse des die Probe (2) durchstrahlenden Lichts (4) 90° beträgt.

## Claims

1. Device (1) for determining parameters of liquid samples (2), which is implemented as integratable in a system (3) with a light source (5) for irradiating the samples (2),
wherein the device (1) comprises at least one mirror surface (10) for deflecting light (4) from the light source (5) from a substantially vertical incidence direction (6) into a penetration direction (11),
wherein the system (3) additionally comprises a detector (7) for measuring light (8), which comes from an irradiated sample (2),
and wherein the detector (7) has a detection direction (9,9'), which is substantially parallel to and spaced apart from the substantially vertical incidence direction (6), so that the at least one detector (7) can only detect the light (8) coming from an individual penetrated sample (2),
**characterized in that** the device (1) is implemented as a movable support (12), which is integratable in the system (3), for microplates (13) having wells (14), which comprises at least one opening (18) for placing a standard cuvette (17) and one opening (18') for placing a standard microplate (13) having samples (2),
and **in that** the at least one mirror surface (10) is arranged on the carrier (12) so that substantially vertical incident light (4) of the light source (5) is deflectable into a substantially horizontal penetration direction (11) and thus a liquid sample (2) contained in a standard cuvette (17) is irradiatable with light (4) in the substantial horizontal penetration direction (11), wherein the light (8) coming from the penetrated sample (2) can reach the detector (7) through the at least one opening (18).

2. Device (1) for determining parameters of liquid samples (2), which is implemented as integratable in a system (3) with a light source (5) for irradiating the samples (2),
wherein the device (1) comprises at least one mirror surface (10) for deflecting light (4) from the light source (5) from a substantially vertical incidence direction (6) into a penetration direction (11),
wherein the system (3) additionally comprises a detector (7) for measuring light (8), which comes from an irradiated sample (2),
and wherein the detector (7) has a detection direction (9,9'), which is substantially parallel to and spaced apart from the substantially vertical incidence direction (6), so that the at least one detector (7) can only detect the light (8) coming from an individual penetrated sample (2),
**characterized in that** the device (1) is implemented as a microplate (13) having wells (14) and comprising the at least one mirror surface (10),
and **in that** the at least one mirror surface (10) of the microplate (13) is arranged so that substantially vertical incident light (4) of the light source (5) is deflectable into a substantially horizontal penetration direction (11) and thus a liquid sample (2) contained in a well (14) is irradiatable using light (4) in the substantially horizontal penetration direction (11), wherein the microplate (13) is placeable over at least one opening (18,18') of a movable support (12) of the system (3), so that the light (8) coming from an individual penetrated sample (2) of the microplate (13) can reach the detector (7) through the at least one opening (18,18').

3. Device (1) according to Claim 1 or 2, **characterized in that** the angle between the detection direction (9') of the detector (7) and the optical axis of the light (4) penetrating the sample (2) is 90°.

4. Device (1) according to Claim 1, **characterized in that** the support (12) is movable in the X and/or Y direction.

5. Device (1) according to Claim 1, **characterized in that** it comprises at least one mirror (15) having the mirror surface (10) and a support surface (16), which is associated with the mirror (15), for placement of a cuvette (17) containing a sample (2), wherein the device (1) comprises, in the region of the support surface (16), the opening (18) for the passage of light (8), which is triggered in the sample and/or reflected by the sample, to the detector (7).

6. Device (1) according to Claim 2, **characterized in that** it comprises a plurality of mirror surfaces (10) and wells (14), wherein one mirror surface (10) is associated with each well (14).

7. Device (1) according to Claim 2, **characterized in that** it comprises a plurality of mirror surfaces (10) and wells (14), wherein one well (14) is associated with each mirror surface (10).

8. Device (1) according to one of Claims 6 or 7, **characterized in that** those wells (14) of the device (1), with which a mirror surface (10) is associated, are associated with a wall (19) on the side facing away from the mirror surface (10).

9. Device (1) according to one of Claims 2 or 6 to 8, **characterized in that** the top surface and/or the bottom surface thereof are at least partially mirrored.

10. Device (1) according to Claim 8, **characterized in that** the wall (19) is implemented as mirrored or light-opaque.

11. Device (1) according to one of Claims 9 or 10, **characterized in that** the microplate comprises at least one thin layer, using which the reflections are caused on parts of its surface.

12. System (3) for determining parameters of liquid-containing samples (2), which comprises a support (12), which is substantially horizontally arranged and is movable in the X and/or Y direction, for microplates (13) having wells (14), **characterized in that** the system (3) comprises at least one device (1) according to one of the preceding claims.

13. Method for determining parameters of liquid samples (2) using a device (1), which is integrated in a system (3) with a light source (5) for irradiating the samples (2),
wherein the device (1) comprises at least one mirror surface (10), using which light (4) from the light source (5) is deflected from a substantially vertical incidence direction (6) into a penetration direction (11);
wherein the system (3) additionally comprises a detector (7), using which light (8), which comes from an irradiated sample (2), is measured, and wherein the detector (7) has a detection direction (9,9'), which is substantially parallel to and spaced apart from the substantially vertical incidence direction (6), so that the at least one detector (7) only detects the light (8) coming from an individual penetrated sample (2),
**characterized in that** the device (1) is implemented as a movable support (12), which is integrated in the system (3), for microplates (13) having wells (14), which comprises at least one opening (18), over which a standard cuvette (17) is placed, and one opening (18'), over which a standard microplate (13) having samples (2) is placed,
and **in that** the at least one mirror surface (10) on the support (12) is situated so that substantially vertical incident light (4) of the light source (5) is deflected in a substantially horizontal penetration direction (11) and thus a liquid sample (2) contained in a standard cuvette (17) is irradiated with light (4) in the substantially horizontal penetration direction (11), wherein the light (8) coming from the penetrated sample (2) reaches the detector (7) through the at least one opening (18).

14. Method for determining parameters of liquid samples (2) using a device (1), which is integrated in a system (3) with a light source (5) for irradiating the samples (2),
wherein the device (1) comprises at least one mirror surface (10), using which light (4) from the light source (5) is deflected from a substantially vertical incidence direction (6) into a penetration direction (11);
wherein the system (3) additionally comprises a detector (7), using which light (8), which comes from an irradiated sample (2), is measured, and wherein the detector (7) has a detection direction (9,9'), which is substantially parallel to and spaced apart from the substantially vertical incidence direction (6), so that the at least one detector (7) only detects the light (8) coming from an individual penetrated sample (2),
**characterized in that** the device (1) is implemented as a microplate (13) having wells (14) and comprising the at least one mirror surface (10), wherein the microplate (13) is placed over at least one opening (18,18') of a movable support (12) of the system (3),
and **in that** the at least one mirror surface (10) of the microplate (13) is arranged so that substantially vertical incident light (4) of the light source (5) is deflected in a substantially horizontal penetration direction (11), and thus a liquid sample (2) contained in a well (14) is irradiated with light (4) in the horizontal penetration direction (11), so that the light (8) coming from an individual penetrated sample (2) of the microplate (13) reaches the detector (7) through this at least one opening (18,18').

15. Method according to one of Claims 13 or 14, **characterized in that** the angle between the detection direction (9') of the detector (7) and the optical axis of the light (4) penetrating the sample (2) is 90°.

## Revendications

1. Dispositif (1) pour déterminer des paramètres d'échantillons liquides (2), réalisé de façon à pouvoir être intégré dans un système (3) avec une source de lumière (5) pour irradier les échantillons (2),
le dispositif (1) comprenant au moins une surface réfléchissante (10) pour dévier la lumière (4) provenant de la source de lumière (5) depuis une direction d'irradiation (6) essentiellement verticale dans une direction de propagation (11), le système (3) comprenant en outre un détecteur (7) pour mesurer la lumière (8) qui vient d'un échantillon irradié (2), le détecteur (7) présentant une direction de détection (9,9') qui s'étend essentiellement parallèlement et à distance de la direction d'irradiation (6) essentiellement verticale, de sorte que le au moins un détecteur (7) ne peut détecter que la lumière (8) provenant d'un échantillon (2) individuel irradié,
**caractérisé en ce que** le dispositif (1) est réalisé sous la forme d'un support (12) mobile intégrable dans le système (3) pour des microplaques (13) avec des puits (14), support qui comprend au moins une ouverture (18) pour positionner une cuvette standard (17) et une ouverture (18') pour positionner une microplaque standard (13) avec des échantillons (2),
et **en ce que** la au moins une surface réfléchissante (10) est agencée sur le support (12) de façon à ce que la lumière (4) émise essentiellement verticale de la source de lumière (5) puisse être déviée dans une direction de propagation (11) essentiellement horizontale et qu'ainsi un échantillon liquide (2) installé dans une cuvette standard (17) puisse être irradié dans la direction de propagation (11) essentiellement horizontale,
la lumière (8) provenant de l'échantillon irradié (2) pouvant atteindre le détecteur (7) par la au moins une ouverture (18).

2. Dispositif (1) pour déterminer des paramètres d'échantillons liquides (2) réalisé de façon à pouvoir être intégré dans un système (3) avec une source de lumière (5) pour irradier les échantillons (2),
le dispositif (1) comprenant au moins une surface réfléchissante (10) pour dévier la lumière (4) provenant de la source de lumière (5) depuis une direction d'irradiation (6) essentiellement verticale dans une direction de propagation (11), le système (3) comprenant en outre un détecteur (7) pour mesurer la lumière (8) provenant d'un échantillon irradié (2), le détecteur (7) présentant une direction de détection (9,9') qui s'étend essentiellement parallèlement et à distance de la direction d'irradiation (6) essentiellement verticale, de sorte que le au moins un détecteur (7) ne peut détecteur que la lumière (8) provenant d'un échantillon (2) individuel irradié,
**caractérisé en ce que** le dispositif (1) est réalisé sous la forme d'une microplaque (13) avec des puits (14), la microplaque comprenant au moins une surface réfléchissante (10),
et **en ce que** la au moins une surface réfléchissante (10) de la microplaque (13) est agencée de telle façon que la lumière (4) de la source de lumière (5) émise essentiellement verticale peut être déviée dans une direction de propagation (11) essentiellement horizontale et qu'ainsi un échantillon liquide (2) contenu dans un puits (14) puisse être irradié avec de la lumière (4) dans la direction de propagation (11) essentiellement horizontale, la microplaque (13) pouvant être positionnée par le biais d'au moins une ouverture (18,18') d'un support mobile (12) du système (3), de sorte que la lumière (8) provenant d'un échantillon (2) individuel irradié de la microplaque (13) puisse atteindre le détecteur à travers la au moins une ouverture (18,18').

3. Dispositif (1) selon la revendication 1 ou 2, **caractérisé en ce que** l'angle entre la direction de détection (9') du détecteur (7) et l'axe optique de la lumière (4) venant irradier l'échantillon (2) est de 90°.

4. Dispositif (1) selon la revendication 1, **caractérisé en ce que** le support (12) est mobile dans la direction X et/ou dans la direction Y.

5. Dispositif (1) selon la revendication 1, **caractérisé en ce qu'**il comprend au moins un miroir (15) avec la surface réfléchissante (10) et une surface de support (16) associée au miroir (15) pour appuyer une cuvette (17) contenant un échantillon (2), le dispositif (1) comprenant dans la zone de la surface de support (16) l'ouverture (18) pour laisser passer la lumière (8) libérée dans l'échantillon et/ou réfléchie par l'échantillon vers le détecteur (7).

6. Dispositif (1) selon la revendication 2, **caractérisé en ce qu'**il comprend une pluralité de surfaces réfléchissantes (10) et de puits (14), une surface réfléchissante (10) étant associée à chaque puits (14).

7. Dispositif (1) selon la revendication 2, **caractérisé en ce qu'**il comprend une pluralité de surfaces réfléchissantes (10) et de puits (14), un puits (14) étant associé à chaque surface réfléchissante (10).

8. Dispositif (1) selon l'une des revendications 6 ou 7, **caractérisé en ce qu'**une surface réfléchissante (10) est associée aux puits (14) du dispositif (1), à laquelle est associée une paroi (19) sur le côté opposé à la surface réfléchissante (10).

9. Dispositif (1) selon l'une des revendications 2 ou 6 à 8, **caractérisé en ce que** sa surface supérieure et/ou sa surface inférieure sont réfléchies au moins partiellement.

10. Dispositif (1) selon la revendication 8, **caractérisé en ce que** la paroi (19) est réalisée réfléchissante ou opaque.

11. Dispositif (1) selon l'une des revendications 9 ou 10, **caractérisé en ce que** la microplaque comprend au moins une fine couche avec laquelle les réfléchissements se produisent sur des parties de ses surfaces.

12. Système (3) pour déterminer des paramètres d'échantillons (2) contenant des fluides, comprenant un support (12) agencé de façon essentiellement horizontal et mobile dans la direction X et/ou dans la direction Y pour des microplaques (13) contenant des puits (14), **caractérisé en ce que** le système (3) comprend au moins un dispositif (1) selon l'une des revendications précédentes.

13. Procédé pour déterminer des paramètres d'échantillons liquides (2) avec un dispositif (1) qui est intégré dans un système (3) comprenant une source de lumière (5) pour irradier les échantillons (2),
le dispositif (1) comprenant au moins une surface réfléchissante (10) avec laquelle la lumière (4) provenant de la source de lumière (5) est déviée depuis une direction d'irradiation (6) essentiellement verticale dans une direction de propagation (11),
le système (3) comprenant en outre un détecteur (7) permettant de mesurer la lumière (8) provenant d'un échantillon irradié (2), et le détecteur (7) présentant une direction de détection (9,9') qui s'étend essentiellement parallèlement et à distance de la direction d'irradiation (6) essentiellement verticale, de sorte que le au moins un détecteur (7) ne détecte que la lumière (8) provenant d'un échantillon (2) individuel irradié,
**caractérisé en ce que** le dispositif (1) est réalisé sous la forme d'un support (12) mobile intégré au système (3) pour des microplaques (13) avec des puits (14), lequel support comprend au moins une ouverture (18) par le biais de laquelle on vient positionner une cuvette standard (17) et une ouverture (18'), par le biais de laquelle on vient positionner une microplaque standard (13) avec des échantillons (2),
et **en ce que** la au moins une surface réfléchissante (10) est agencée sur le support (12) de telle façon que la lumière (4) émise essentiellement verticale de la source de lumière (5) est déviée dans une direction de propagation (11) essentiellement horizontale et qu'ainsi un échantillon liquide (2) contenu dans une cuvette standard (17) est irradié avec une lumière (4) dans la direction de propagation (11) essentiellement horizontale,
la lumière (8) provenant de l'échantillon (2) irradié parvenant au détecteur (7) par la au moins une ouverture (18).

14. Procédé pour déterminer des paramètres d'échantillons liquides (2) avec un dispositif (1) intégré dans un système (3) comprenant une source de lumière (5) pour irradier les échantillons (2),
le dispositif (1) comprenant au moins une surface réfléchissante (10), avec laquelle la lumière (4) provenant de la source de lumière (5) est déviée depuis une direction d'irradiation (6) essentiellement verticale dans une direction de propagation (11),
le système (3) comprenant en outre un détecteur (7) avec lequel on mesure la lumière (8) qui vient d'un échantillon (2) irradié, et le détecteur (7) présentant une direction de détection (9,9') qui s'étend essentiellement parallèlement et à distance de la direction d'irradiation (6) essentiellement verticale, de sorte que le au moins un détecteur (7) ne détecte que la lumière (8) provenant d'un échantillon (2) individuel irradié,
**caractérisé en ce que** le dispositif (1) est réalisé sous la forme d'une microplaque (13) avec des puits (14) comprenant au moins une surface réfléchissante (10), la microplaque (13) étant positionnée par le biais d'au moins une ouverture (18,18') d'un support mobile (12) du système (3),
et **en ce que** la au moins une surface réfléchissante (10) de la microplaque (13) est agencée de telle façon que la lumière (4) incidente essentiellement verticale de la source de lumière (5) est déviée dans une direction de propagation (11) essentiellement horizontale et qu'ainsi un échantillon liquide (2) contenu dans un puits (14) est irradié avec de la lumière (4) dans une direction de propagation (11) horizontale, de sorte que la lumière (8) provenant d'un échantillon (2) individuel irradié de la microplaque (13) atteint le détecteur (7) par cette au moins une ouverture (18,18').

15. Procédé selon l'une des revendications 13 ou 14, **caractérisé en ce que** l'angle entre la direction de détection (9') du détecteur (7) et l'axe optique de la lumière (4) irradiant l'échantillon (2) est de 90°.
